(19) Europäisches Patentamt
European Patent Office
Office européen des brevets

(11) Publication number: 0 195 216 B1

# (12) EUROPEAN PATENT SPECIFICATION

(45) Date of publication of patent specification: 17.01.90

(51) Int. Cl.$^5$: G 11 B 5/70

(21) Application number: 86101469.4

(22) Date of filing: 05.02.86

## (54) Dispersing agents used for magnetic recording coatings.

(30) Priority: 21.03.85 US 714320

(43) Date of publication of application: 24.09.86 Bulletin 86/39

(45) Publication of the grant of the patent: 17.01.90 Bulletin 90/03

(84) Designated Contracting States: DE FR GB IT

(56) References cited:

PATENT ABSTRACTS OF JAPAN, vol. 6, no. 212 (P-151)1090r, 26th October 1982; & JP - A - 57 117 124 (TOKYO SHIBAURA DENKI K.K.) 21-07-1982

PATENT ABSTRACTS OF JAPAN, vol. 9, no. 109 (P-355)1832r, 14th May 1985; & JP - A - 59 229 740 (KONISHIROKU SHASHIN KOGYO K.K.) 24-12-1984

(73) Proprietor: International Business Machines Corporation
Old Orchard Road
Armonk, N.Y. 10504 (US)

(72) Inventor: Piltingsrud, Douglas Howard
3526 9 1/2 Avenue NW
Rochester MN 55901 (US)
Inventor: Shen, John Chen Shyan
545 NE 21 Street
Rochester 55904 (US)

(74) Representative: Colas, Alain
Compagnie IBM France Département de Propriété Intellectuelle
F-06610 La Gaude (FR)

(56) References cited:
PATENT ABSTRACTS OF JAPAN, vol. 6, no. 255 (P-162)1133r, 14th December 1982; & JP - A - 57 152 527 (HITACHI MAXELL K.K.) 20-09-1982

PATENT ABSTRACTS OF JAPAN, vol. 6, no. 125 (P-127)1003r, 10th July 1982; & JP - A - 57 50325 (HITACHI SEISAKUSHO K.K.) 24-03-1982

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 195 216 B1

Courier Press, Leamington Spa, England.

**Description**

This invention relates to magnetic recording media and more particularly to an improved binder system for high density magnetic storage media.

As magnetic recording densities of rigid magnetic storage media progressively increase and track widths correspondingly decrease, the signal to noise ratio of the magnetic recording system must improve. Enhancement of the signal to noise ratio further requires that the coating materials be capable of forming a very thin coating (less than 0,5 mm) with a smooth surface (a $2{,}5.10^{-3}$ to $1.10^{-2}$ millimeter arithmetic average —AA— finish), that will allow a transducer carrying slider assembly to fly only a few millionths of a centimeter above the surface. Such magnetic coating materials must also be able to achieve high orientation ratios and have an absence of coating defects such as gels, pinholes and coating runs.

It is known in the art that a highly oriented magnetic media can be produced by incorporating a dispersing additive into the basic binder system. The dispersant serves to chelate the magnetic particles such that they are uniformly suspended within the uncured binder to permit magnetic orientation in the tangential direction along the disk surface after application of the ink or coating. The commonly used dispersing agents are silicone copolymer, acrylic resin, carboxylated polyester resins and titanate coupling agents. Organic or inorganic compounds that contain phosphite or phosphate groups can also be used as dispersants.

All these commercially available dispersants contain reactive monomers; that is, phosphate ester compounds contain phosphoric acid, H3PO4; acrylic or carboxylated polyester resins contain mono acid, R—COOH; and silicone polymers contain hydroxyl silicate, Si-OH. These reactive polymers will react with epoxide (if the binder system contains epoxy resin) during the coating preparation. Such undesirable side reactions not only affect the stability of the ink, but also create coating defects, namely resin gels. The problem becomes more severe when higher molecular weight epoxy resin is used in the binder system. The molecular weight of epoxy resin used in binder systems is typically more than 2000. The gel particle size increases with the increasing molecular weight of the epoxy, which is unacceptable in high recording density environments, since these defects can result in missing bits and unusable sectors or even entire tracks.

When a conventional dispersant is used in the magnetic recording coating, a common method used to reduce the concentration of resin gel particles is the use of a fine filter before applying the coating composition to a substrate surface. This method provides a limited reduction in defects and does nothing to improve the stability of the coating. In addition, the loss of pigment during filtration changes the pigment/binder ratio and often causes process instability.

There are numerous prior art patents and publications showing different dispersant compositions for magnetic recording coatings. US—A—4.074.012 discloses a magnetic coating composition containing acidic phosphate ester with aliphatic-amine as a dispersor in an aqueous solution and US patent 4.153.754 teaches a magnetic coating composition employing an N-acylsarocosine derivative as a dispersing agent. European patent application 64.129 discloses an epoxy/phenolic based magnetic coating having titanate coupling agents as a dispersing additive. US—A—4.049.566 discloses a magnetic coating composition having 2 to 20 percent by weight of formic acid in the thermoset epoxy binder and US—A—3.505.268 show a polymer dispersant for conventional coating application wherein the dispersant is a graft copolymer comprising hydroxyl polyacrylate. US patent 3,460,984 discloses a magnetic coating having an acidic phosphorus ester as a dispersing agent in a vinyl copolymer polyurethane binder. None of these references, nor any others of which the inventors are aware, disclose the unique constituents possessed by the magnetic coating described herein.

JP—A—59 229740 describes a dispersing agent for a magnetic recording medium containing phosphoric ester residues and epoxy constituent residues.

According to the present invention the dispersants are pretreated, so that undesirable side reactions are eliminated. In addition, it was found that the epoxide treated dispersants were more effective than untreated dispersants with respect to producing high orientation ratios in magnetic coatings.

Two of the most effective dispersants currently used in our magnetic coatings are 1. organophosphate ester and 2. carboxylated polyester polyol. These require different processes for treatment.

Stodex P-100 (trademark of Dexter Chemical Corporation) is an organophosphate ester derived from a combination of ethoxylates and alcohols, it contains 0.3 to 2.5 percent phosphoric acid, less than 1% water, phosphate monoester, di-ester and polyphosphate. In general, the treatment process is to remove the polyphosphate with water and the phosphoric acid and residual polyphosphate by reacting these with low molecular weight epoxy resin according to the following equations:

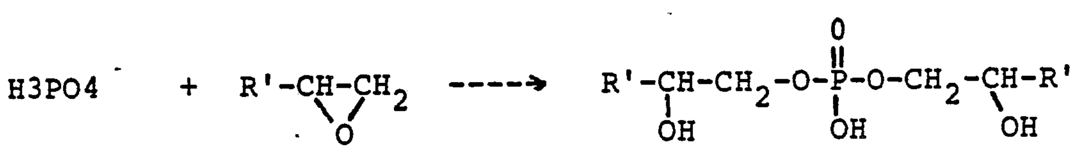
1.

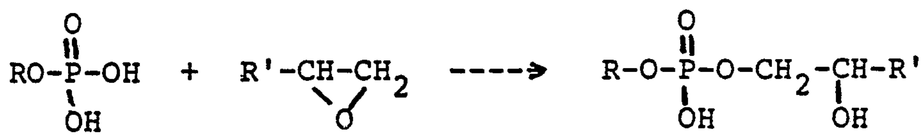 2.

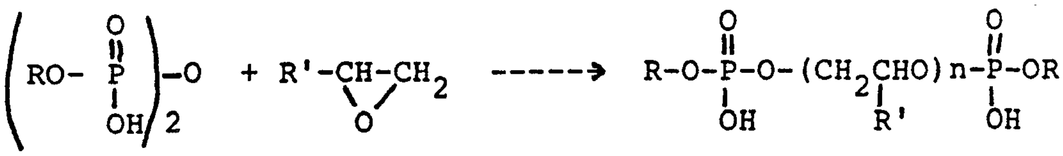 3.

wherein R is an alkyl, oxyalkyl, aryl, alkyaryl or alkoxyalkyl group of 8 to about 35 carbon atoms, R′ is an alkyl group of 10 to 25 carbon atoms and n is a positive integer number.

The reaction of equation 1 preferably employs about 2 moles of the epoxy resin per each mole of H3PO4. The reaction can be readily run in an inert solvent or without a solvent. The temperature of the reaction is controlled between 40 to 110 degrees centrigrade. It should be noted that the epoxy resin should have a molecular weight of less than 1000 in order to avoid gelatinous or insoluble by-products.

The phosphate monoester used in the reaction of equation 1 should have a molecular weight of less than 700.

The reaction of equation 2 preferably employs one mole of epoxy resin per each mole of phosphate monoester. The temperature of reaction is controlled at 40 to 110 degrees centigrade and reaction is carried out within air or oxygen gas atmosphere for less than 60 minutes.

The reaction of equation 3 preferably employs one mole of epoxy resin per mole of polyphosphate. The reaction is carried out within an air or oxygen gas atmosphere for less than 60 minutes at 40 to 110 degrees centigrade.

In the treatment for another dispersant, carboxylated polyester polyol, it is preferable to react the epoxy resin according to the following equation:

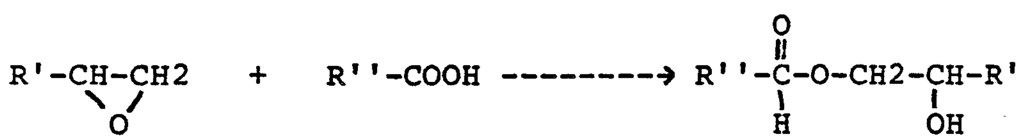

wherein R′ is an alkyl group of 10 to 25 carbon atoms, and R″ is an aliphatic ester group which contains at least two hydroxyl groups and has molecular weight of less than 1500. The reaction is controlled at a temperature of 40 to 110 degrees centigrade.

The use of dispersants of this invention in a binder system of polyurethane/epoxy or phenolic/epoxy can lead to an increase in the magnetic particle volume concentration and an improvement in the flow properties of the coatings. In addition, when this dispersant is used in a cross linked binder system, it is not only effective as a dispersant additive, but also reacts with crosslinkers, such as isocyanates, phenolic or melamine resins, to form a part of the cross linked compound formed during the curing process.

The use of the dispersants of this invention are similar or closely related in composition to those of the coating containing epoxy resins. Therefore, the coating compatibility is greatly improved. In other words, the epoxide treated dispersants not only disperses the magnetic particles, but also disperses the organic polymer materials.

It is an object of this invention to provide a magnetic recording coating composition with improved orientation capability, enhanced coating wear properties and increased polymer-polymer compatibility. It is a further object of this invention to provide a magnetic coating which has reduced magnetic defects and from which resin gellation has been eliminated. It is also an object of this invention to provide a magnetic coating composition that has an increased rate of polymer dispersion in the binder, an increased pigment volume concentration, improved flow and improved stability.

Brief Description of the Drawing

Figs.. 1A, 1B and 1C respectively show the generic formula for the monoester, di-ester and polyphosphate compounds encountered in the dispersant compositions treated in accordance with the present invention.

Fig. 2 is a flow chart depicting the dispersant treatment sequence taught by the present invention.

Detailed Description

The new dispersant is made by a process in which commercial organophosphate compounds are used as the starting material.

In general, the organophosphate material is composed of monoester (Fig. 1A), di-ester (Fig. 1B), polyphosphate (Fig. 1C), phosphoric acid, and water.

In Fig. 1A, Fig. 1B and Fig. 1C the R and R' are hydrocarbon groups containing alkyl, oxyalkyl, aryl, alkyaryl or alkoxyalkyl of 8 to 35 carbon atoms.

In this invention, the process of converting the organophosphate material to epoxy phosphate dispersant involves a two step preparation; Step 1, purification and Step 2, synthesizing.

The purification step is to remove the undesirable by-products polyphosphate and water in the starting material. The presence of these by-products in the magnetic coating reduces the dispersing ability of the dispersant and causes gel formation that is not acceptable for high performance magnetic recording media.

The synthesizing step is to react the remaining compounds with a low molecular weight bisphenol-A epoxy, having an average molecular weight of 130 to 1000. Under a well defined condition, the formation of epoxy phosphate ester can be achieved in a desirable structure.

Before pursuing the purification step, it is necessary to identify the concentration of polyphosphate and water in the starting material.

Instrumental methods are used to determine the concentrations; such as phosphorus-31 NMR, Karl Fischer titration and ion chromatography. It has been discovered that if the polyphosphate concentration is greater than 1,8 mole percent then an additional step should be used; water is added to the starting material in a concentration not in excess of 5% by weight to react with the polyphosphate in a nitrogen atmosphere at an elevated temperature. The oject is to generate monoester by decomposing the polyphosphate.

An excess of water versus stoichiometric quantities is used to drive the polyphosphate concentration to a minimum and because water is lost due to the sparged nitrogen. The optimum amount of water is dependent on the polyphosphate concentration, the apparatus used, temperature profile, and nitrogen gas rate.

Nitrogen sparging is used to suppress decomposition of polyphosphate to phosphoric acid during heating. A typical nitrogen delivery rate for the reaction is 1 liter per minute per 1 liter solution with a heat up time of 30 to 60 minutes, from 60°C to 115—120°C and a cooling time of less than 20 minutes from 120°C to 60°C after a reaction time of 30 minutes at the 115—120°C.

It should be noted, that the decomposition of polyphosphate in the presence of water does not take place below 100°C at a significant rate, and formation of undesirable phosphoric acid is significant if reaction temperature reaches over 120°. Therefore, a precise temperature control is required in this step.

If the concentration of polyphosphate in the starting material is less than 1,8 mole percent, the above step can be eliminated.

The next step is used to further reduce the residual polyphosphate and water.

In this step an organo solvent, such as isophorone at a concentration of 10 to 100 percent by weight of starting material, is added. Nitrogen sparging is done at 1 liter per minute per 2 liters of solution with a heat up time of less than 45 minutes from 60°C to 140°C and cooling time of less than 30 minutes from 140°C to 60°C after a time of up to 90 minutes at 135° to 140°C.

During heating, the water is removed by reaction and by gas sparging, and the remaining polyphosphates are converted to mono-ester. In this step, the organic solvent allows a higher temperature to be used without significant increases in phosphoric acid generation, while polyphosphate is further reduced to less than 0,6 mole percent and water less than 0.4%.

Using a carboxylated polyester polyol as a starting material in the formation of epoxy polyester dispersant requires no purification step. However, this is ilimited to those carboxylated polyester polyols having molecular weight of less than 1500 and containing at least two hydroxyl groups.

The synthesizing step is the formation of epoxy phosphate ester or epoxy polyester dispersant using low molecular weight bisphenol-A epoxy to react with the purified organophosphate, or carboxylated polyester polyol.

The reaction is carried out by heating the solvent-organophosphate or solvent-carboxylated polyester mixture at 40°C to 110°C with dry filtered air sparged in and then adding a solution of epoxy. The whole mixture is heated at 40°C to 110°C for 1 to 60 minutes then cooled to less than 60°C and the air sparging stopped. A range of 0,2 to 1,0 moles of epoxy per mole of dispersant to be treated is used.

Heating and cooling between 60°C and 80°C is done in less than 20 minutes. The epoxy solution used is kept at 50 to 90% isophorone solvent. It should be pointed out that the rate of oxygen gas or air sparging is important, heating and cooling time should be also precisely controlled.

## Example I

Example I is the purification step. The starting material is an organophosphate ester having a concentration of polyphosphate greater than 1,8 mole percent as determined by phosphorus-31 NMR.

1100 grams of organophosphate (Strodex P-100), containing 6,9 mole percent of polyphosphate, is first filtered using a 0,6 micron size filter to remove any gels or contaminants. This material is then placed in a dried 5 liter four-necked flask, equipped with a nitrogen gas sparger, mechanical glass/teflon stirrer, reflux condenser, addition funnel, and temperature recording thermocouple. The reaction flask is immersed in a controllable temperature bath. While nitrogen gas is sparged into the solution at the rate of 1,3 liters per minute, 44 grams of DI water is slowly added with stirring. The temperature of bath is then heated to 115°C at the heating rate of 5 degrees C per minute. The reaction is maintained at 115 to 120°C for 30 minutes and

then cooled to 60°C during a time period of 10 to 20 minutes.

The resulting material will have a concentration of polyphosphate less than 1,8 mole percent.

Example II

Example II is a continuation of Example I which is used to further reduce the residual polyphosphate and water. It can also be used for those organophosphate ester compounds that contain less than 1,8 mole percent of polyphosphate.

A total of 1100 grams of the organo solvent, isophorone, is added to the solution of Example I in the sample apparatus. The nitrogen gas is sparged at the same rate as Example I. The whole solution is heated to 135°C at the heating rate of 2,5—3,0 degrees C per minute under a constant agitation speed. The reaction is maintained at 135 to 145°C for 90 minutes and then cooled to 60°C during a time period of 20 to 30 minutes.

The resulting material will reduce residual polyphosphate to a minimum.

Example III

Example III is the synthesizing step, during which an epoxy resin having a molecular weight less than 1000 is reacted with the purified organophosphate ester compounds.

The solution of Example II is placed in a 5 liter apparatus as described in Example I. While stirring, air is sparged in at the rate of 1 liter per minute. Upon heating to a temperature of 80°C, 1452 grams of epoxy solution is added to the solution at the rate of 40 to 50 grams per second. The epoxy solution is a mixture of 352 grams of Epon 828 (Trademark of Shell Chemical Corporation) and 1100 grams of isophorone solvent. The mixture is then reheated to 80°C in less than 20 minutes. When the reaction is completed, after 10 minutes at 80°C, the final product is cooled to room temperature at a cooling rate of 1 to 2 degrees C per minute.

Example IV

A suitable reactor is charged with 100 gms of epoxy resin and 100 gms of isophorone solvent. The mixture of 25 gms of R221 polyester (Trademark of Mobay Chemical Company) with 150 gms of solvent is slowly added into the reactor over a period of 20 minutes. The entire mixture is thoroughly mixed at a temperature of 80°C to 95°C for 45 minutes until the reaction is completed. The final product is cooled to room temperature and filtered through a 0,6 micron filter.

Example V

| | Parts by Weight |
|---|---|
| 43% Ketoxime-blocked aromatic/aliphatic polyisocyanate/isocyanurate copolymer Mondur HCB (Mobay) | 60.7 |
| 50% Bisphenol A epoxy resin DER 667 (DOW) in 60/40 Isophorone/xylene solvent | 64.9 |
| Dispersant of Example III (40% epoxy phosphate esten in isophorone) | 9.0 |
| Fluorocarbon surfactant | 0.1 |
| Organic metal catalyst | 0.1 |
| Magnetic particles iron oxide | 120.0 |
| Solvents isophorone/xylene | 150.0 |

The coating composition of Example V is prepared as follows:

The magnetic particle dispersion is first prepared by adding 120 parts of iron oxide particles to 9,0 parts of dispersant III and a portion of the solvent. This mixture is milled using conventional milling techniques such as ball mill or media mill until free of agglomerates. Thereafter, 64.9 parts of 50% DER 667 are mixed with 60,7 parts of 42% Mondur HCB in solvents added to the mixture of step 1 above and milled. The 0,1 parts catalyst and 0,1 parts of surfactant are added to adjust the final viscosity of the total mixture to approximately 50 cps at 25°C as measured by a Ferranti-Shirley viscometer at 1500 $sec^{-1}$. After adjusting ink viscosity, the mixture is put through a 2 micrometer nominal to 8 micrometer absolute filter to remove any possible debris or contaminants.

The composition of Example VI is prepared in similar fashion.

Example VI

| | |
|---|---|
| Epon 1007 epoxy resins (Shell) | 100 |
| Dispersant of Example III (40% epoxy phosphate ester in isophorone) | 20 |
| Dispersant of Example IV (33% epoxy polyester in isophorone) | 24 |
| Resinox P97 (50% (Monsanto) | 200 |
| Magnetic particles | 400 |
| Surfactant | 6 |
| Solvent | 800 |

The coating composition prepared according to the Examples V and VI, is applied to an aluminum disk substrate using conventional spin coating techniques. The magnetizable particles are then oriented circumferentially of the disk surface using the well established magnetic field orientation particle following which the coating is cured at an elevated temperature of about 150 to 200°C for 45 minutes to 2 hours. After cooling, the coated disk is polished, washed and lubed prior to magnetic test.

## Claims

1. A rigid magnetic recording medium comprising a non-magnetic supporting substrate and a magnetizable coating with thickness less than a micron, wherein said magnetizable coating comprises a binder and magnetic pigments finely dispersed therein by means of a dispersing agent, characterized in that said dispersing agent is one of an epoxy polyester derivative, and an epoxy phosphate ester derivative formed as a reaction product of organophosphate and bisphenol-A epoxy, the reaction being carried out in an isophorone solvent under air or oxygen gas purge at a temperature of 40°C to 110°C for 1 to 60 minutes.

2. The magnetic recording medium of Claim 1, wherein the epoxy phosphate ester compound has the formula

$$(R2—O—R1—O—)_x—\overset{\overset{\large O}{\|}}{P}—(—OH)_y$$

wherein R1 is a bivalent alkyl, aryl, cycloalkyl or alkylaryl group of 1 to 12 carbon atoms which can be hydroxyl substituted; R2 is an epoxide having 2 to 12 carbon atoms; and x and y individually are 1 or 2 and x+y equals 3.

3. The magnetic recording medium according to any one of the preceding claims wherein the epoxy polyester dispersing agent is a reaction product of carboxylated polyester polyol and bisphenol-A epoxy, the reaction is carried out in an isophorone solvent under air or oxygen gas purge at a temperature of 40°C to 110°C for 1 to 60 minutes.

4. The magnetic recording medium of claim 3, wherein carboxylated polyester polyol has molecular weight of less than 1500 and contains at least two hydroxyl groups.

5. The magnetic recording medium of claims 1 or 3, wherein the bisphenol-A epoxy has molecular weight in the range of 130 to 1000.

6. The magnetic recording medium according to any one of the preceding claims, wherein the dispersing agent is used in an amount of 2 to 15 percent of total binder solid.

7. The magnetic recording medium according to any one of the preceding claims, wherein the binder comprises one or a combination of an epoxy resin, a phenolic resin and a polyisocyanate resin.

## Patentansprüche

1. Steifes magnetisches Registriermittel, bestehend aus einem nichtmagnetischen Trägersubstrat und einer magnetisierbaren Beschichtung mit einer Dicke von weniger als einem Mikron, wobei die genannte magnetisierbare Beschichtung ein Bindemittel beinhaltet sowie magnetische, mittels eines Dispergators fein darin zerstäubte Pigmente, dadurch gekennzeichnet, daß der genannte Dispergator aus einem Epoxid-Polyesterderivat und einem Epoxid-Phosphatesterderivat besteht, das als Reaktionsprodukt aus Organophosphat und Bisphenol-A-Epoxid gebildet ist, wobei die Reaktion in einem isophoronen Lösemittel in einer Luft- oder Sauerstoffgasatmosphäre bei einer Temperatur von 40°C bis 110°C verläuft und 1 bis 60 Minuten dauert.

2. Magnetisches Registriermittel nach Anspruch 1, bei dem die Epoxid-Phosphatesterverbindung folgender Formel entspricht:

$$(R2{-}O{-}R1{-}O{-})_x{-}\overset{\overset{\displaystyle O}{\|}}{P}{-}({-}OH)_y$$

in der R1 eine doppelwertige Alkyl-, Aryl-, Cycloalkyl- oder Alkylarylgruppe mit 1 bis 12 Kohlenstoffatomen ist, die durch Hydroxyl ersetzt werden kann, R2 ein Epoxid mit 2 bis 12 Kohlenstoffatomen, x und y jeweils 1 oder 2 sind und x + y 3 entsprechen.

3. Magnetisches Registriermittel nach allen der vorstehenden Ansprüche, bei dem der Dispergator für den Epoxid- Polyester ein Reaktionsprodukt aus carboxyliertem Polyester-Polyol und Bisphenol-A-Epoxid ist, die Reaktion in einem isophoronen Lösemittel in Luft- oder Sauerstoffgasatmosphäre bei einer Temperatur von 40°C bis 110°C verläuft und 1 bis 60 Minuten dauert.

4. Magnetisches Registriermittel nach Anspruch 1, bei dem das carboxylierte Polyester-Polyol ein Molekulargewicht von weniger als 1500 aufweist und zumindest zwei Hydroxylgruppen umfaßt.

5. Magnetisches Registriermittel nach Anspruch 1 bis 3, bei dem das Bisphenol-A-Epoxid ein Molekulargewicht im Bereich zwischen 130 und 1000 aufweist.

6. Magnetisches Registriermittel nach allen der vorstehenden Ansprüche, bei dem der Dispergator in Mengen zwischen 2 und 15 Prozent des gesamten soliden Bindemittels benutzt wird.

7. Magnetisches Registriermittel nach allen der vorstehenden Ansprüche, bei dem das Bindemittel eine Verbindung aus einem Epoxidharz, einem Phenolharz und einem Polyisocyanatharz oder eins dieser Harze aufweist.

**Revendications**

1. Un milieu d'enregistrement magnétique rigide comprenant un substrat de support non magnétique et un revêtement magnétisable d'une épaisseur inférieure au micron, dans lequel ledit revêtement magnétisable comprend un liant et des pigments magnétiques finement dispersés dans celui ci au moyen d'un agent de dispersion, caractérisé en ce que ledit agent de dispersion est un dérivé de polyester époxy ou d'ester phosphate époxy formé comme un produit de réaction d'organophosphate et de bisphénol-A, la réaction étant provoquée dans un solvant isophorone sous épuration gazeuse d'air ou d'oxygène à une température de 40°C à 110°C pendant 1 à 60 minutes.

2. Le milieu d'enregistrement magnétique de la revendication 1 dans lequel le composé d'ester phosphate époxy a la formule suivante:

$$(R2{-}O{-}R1{-}O{-})_x{-}\overset{\overset{\displaystyle O}{\|}}{P}{-}({-}OH)_y$$

dans laquelle R1 est un groupe alkyl, aryl, cycloalkyl ou alkylaryl bivalent de 1 à 12 atomes de carbone qui peut être remplacé par de l'hydroxyl, R2 est une époxyde ayant de 2 à 12 atomes de carbone et x et y individuellement sont égaux à 1 ou 2 et x+y est égal à 3.

3. Le milieu d'enregistrement magnétique selon l'une quelconque des revendications précédentes dans lequel l'agent de dispersion de polyester époxy est un produit de réaction du poluol polyester carboxylé et d'époxy bisphénol-A, la réaction étant provoquée dans un solvant isophorone sous épuration gazeuse d'air ou d'oxygène à une température entre 40°C et 110°C pendant 1 à 60 minutes.

4. Le milieu d'enregistrement magnétique de la revendication 3 dans lequel le polyol polyester carboxylé a un poids moléculaire inférieur à 1500 et contient au moins deux groupes hydroxyles.

5. Le milieu d'enregistrement magnétique de la revendication 1 ou 3 dans lequel l'époxy bisphénol-A a un poids moléculaire compris entre 130 et 1000.

6. Le milieu d'enregistrement magnétique selon l'une quelconque des revendications précédentes dans lequel l'agent de dispersion est utilisé dans une quantité de 2 à 15% du solide liant total.

7. Le milieu d'enregistrement magnétique selon l'une quelconque des revendications précédentes dans lequel le liant comprend l'un ou une combinaison des produits suivants: résine époxy, résine phénolique et résine polyisocyanate.

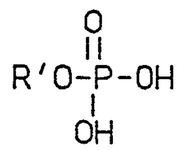

MONOESTER

FIG. 1A

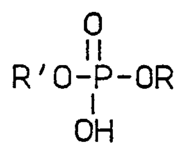

DI-ESTER

FIG. 1B

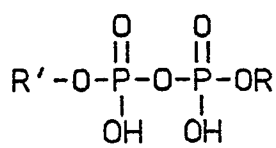

POLYPHOSPHATE

FIG. 1C

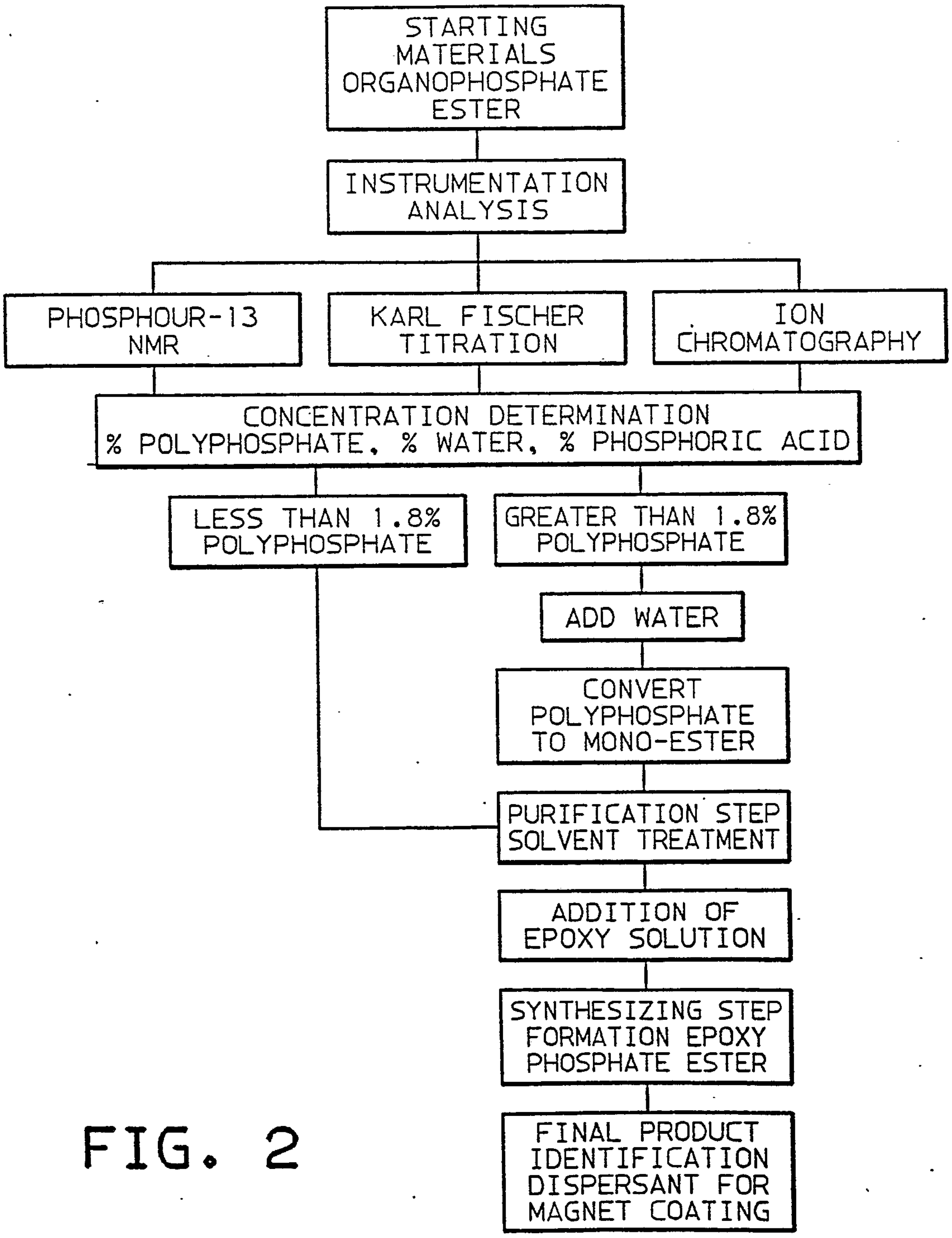
STARTING MATERIALS ORGANOPHOSPHATE ESTER
INSTRUMENTATION ANALYSIS
PHOSPHOUR-13 NMR
KARL FISCHER TITRATION
ION CHROMATOGRAPHY
CONCENTRATION DETERMINATION
% POLYPHOSPHATE, % WATER, % PHOSPHORIC ACID
LESS THAN 1.8% POLYPHOSPHATE
GREATER THAN 1.8% POLYPHOSPHATE
ADD WATER
CONVERT POLYPHOSPHATE TO MONO-ESTER
PURIFICATION STEP SOLVENT TREATMENT
ADDITION OF EPOXY SOLUTION
SYNTHESIZING STEP FORMATION EPOXY PHOSPHATE ESTER
FINAL PRODUCT IDENTIFICATION DISPERSANT FOR MAGNET COATING

FIG. 2